(19) Europäisches Patentamt
European Patent Office
Office européen des brevets

(11) EP 3 028 568 A1

(12) **EUROPEAN PATENT APPLICATION**

(43) Date of publication:
08.06.2016 Bulletin 2016/23

(51) Int Cl.:
*A01N 25/04* (2006.01)     *A01N 25/28* (2006.01)
*A01N 25/30* (2006.01)     *A01N 59/00* (2006.01)
*A01P 1/00* (2006.01)

(21) Application number: 14382498.5

(22) Date of filing: 05.12.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Desinfeccion Profesional, S.L.**
**08012 Barcelona (ES)**
• **Fundació Institut Català de Nanociència i Nanotecnologia**
**08193 Bellaterra (ES)**
• **Institució Catalana de Recerca i Estudis Avançats**
**08010 Barcelona (ES)**
• **Fundació Institut d'Investigació en Ciències de la Salut Germans Trias i Pujol**
**08916 Badalona, Barcelona (ES)**

(72) Inventors:
• **Martorell Loubièr, Gérard**
**08011 BARCELONA (ES)**
• **Maspoch Comamala, Daniel**
**08172 SANT CUGAT DEL VALLÈS (ES)**
• **Cano Sarabia, Antonia María**
**30560 ALGUAZAS (ES)**
• **Ausina Ruiz, Vicente**
**08025 BARCELONA (ES)**
• **Hernández Rodríguez, Águeda**
**08035 BARCELONA (ES)**

(74) Representative: **ZBM Patents - Zea, Barlocci & Markvardsen**
**Plaza Catalunya, 1**
**08002 Barcelona (ES)**

(54) **Biocidal composition with dual inmediate and remnant activity**

(57) The present invention relates to a water-in-oil-in-water (W1/O/W2) double emulsion comprising: (a) an internal water phase (W1) comprising: (a1) one or more non-volatile biocide active ingredient; (a2) one or more lipophilic surfactants; and (a3) water; (b) an intermediate oily phase (O) between the internal water phase and the external water phase comprising one or more oil compounds; and (c) an external water phase (W2) comprising: (c1) one or more volatile biocide active ingredient; (c2) one or more hydrophilic surfactants; and (c3) water.

EP 3 028 568 A1

**Description**

The present invention relates to the field of biocide compounds. Particularly, in the field of antiseptics and disinfectants. More particularly, to compositions with dual inmediate and remnant biocidal activity; a process for their preparation; compositions containing them; and their use as biocidal agent for living tissues and/or inanimate surfaces.

BACKGROUND ART

Biocidal agents have been used as antiseptics and disinfectants to kill or restrict the growth of micro-organisms when applied to a living tissue like skin or inanimate objects such as hard surfaces. Biocidal agents are used extensivey in hospitals and other health care settings for a variety of topical and hard-surface applications. In particular, they are an essential part of infection control practices and aid in the prevention of nosocomial infections. These do have a huge cost impact for health settings and human kind in general.

Therefore, health professionals continuously demand new developments of effective, secure and quick disinfection systems that provide protection against re-infections.

The efficacy of a biocidal composition can be defined as the power to produce the antiseptic or disinfectant effect, and is related to the intrinsic efficacy of the active substance/ingredient contained in it. Nevertheless, this efficacy can be influenced by physical and chemical factors such as for example temperature, pH, relative humidity and water hardness, but also by the presence of other substances such as body fluids, additives or other active agents.

Most of the biocide active ingredients widely used in sanitary field have proved a broad-sprectrum of biocidal activity. Examples of broad-spectrum biocide active ingredients are hypochlorite salts such as sodium hypochlorite and oxygen release compounds such as hydrogen peroxide. However, other types of biocide active ingredients also used such as phenols, quaternary ammonium compounds and biguanides (including chlorhexidine) are relatively ineffective against bacterial spores, and many of them have limited ability to kill non-enveloped viruses and mycobacteria.

Therefore, new compositions combining two or more cleaning, antiseptic and/or disinfectant agents have been developed. Tipically, each one of the agents included in those compositions have different biocide active spectrum which together can increase or broaden the disinfectant efficacy of the composition. Unfortunately, it has been reported that some microorganism may develop resistance to the exposure to some of those combination of biocide active ingredients. Additionally, the existence of incompatibilities between some biocides producing hazardous or non effective compounds has also been reported. Different approaches for avoiding these biocidal incompatibilites has been disclosed in the state of the art. One of these aproaches implies to encapsulate at least one of the biocide. In particular, disinfectant compositions comprising two or more incompatible biocides containing at least one in encapsulated form have been disclosed.

Some of the biocide active ingredients that are commouly used are volatile biocides, for instance sodium hypochlorite and oxygen release compounds. It has been reported that when a volatile biocide active ingredient comes into contact with a fluid (for example water), the fluid produces the vaporization of the biocidal agent. Therefore, volatile biocide active ingredients are commonly used in a closed system (encapsulated) so that the antimicrobial vapor does not fade out. In particular, the US patent aplication number US20100158851 discloses a water-in-oil-in-water (W1/O/W2) double emulsion containing a volatile biocide active ingredient and a non-volatile biocide active ingredient, in which the volatile biocide active ingredient is encapsulated to provide a sustained release of the volatile biocide. The application of these emulsions onto an innert object allows forming an antimicrobial surface coating with the release-killing, contact-killing and anti-adhesion effects. These emulsions comprises preferably a mixture of chlorine dioxide, a chlorite salt and chlorine as an encapsulated volatile biocide, and the non-volatile biocide active ingredient is limited to metal containing biocide active ingredients, triclosan, carboxylic acids, sugar acids or their combination.

However, those compositions comprising at least an encapsulated volatile biocide active ingredient in combination with a non-encapsulated non-volatile biocide, have a limited biocide effectiveness. This limited effectiveness is caused by the limited biocidal activity of the inmediate non-volatile biocide active ingredient activity, and the inefficacy of the encapsulate volatile biocide active ingredient when is applied to a dry innert surface. Finally, the use of these compositions does not avoid potential incompatibilities between both biocide active ingredients, even by desestabilizing the water-in-oil-in-water (W1/O/W2) double emulsion; or by the release of the encapsulate volatile biocide active ingredient when the non-volatile biocide active ingredient is still onto the innert surface.

Therefore, from what is known in the art it is derived that there is still the need of providing safer and more effective antiseptic and disinfectant compositions having both a inmediate and remnant broad-spectrum biocidal activity.

SUMMARY OF THE INVENTION

Inventors have found that the specific composition of the water-in-oil-in-water double emulsion comprising a non-volatile encapsulated biocide active ingredient and a volatile non-encapsulated biocide active ingredient of the present invention have the required disinfectant effectiveness for the treatment of living tissue and inaminate objects in the health care facilities. Those emulsions are stable under normal use and storage conditions allowing long half-life. Unlike the inefficacy of the disinfectant compositions of the state of the art, the double emulsion of the invention shows both a high inmediate broad spectrum biocidal activity combined with prolonged remnant broad spectrum biocidal activity even in case of re-contamination. The prolonged high disinfectant effectiveness of the double emulsion of the present invention allows the reduction of the cleaning procedures without compromising hygiene. It is advantegeous because it may be associated to a reduction of the hygiene procedures economical cost.

Thus, a first aspect of the present invention relates to a water-in-oil-in-water (W1/O/W2) double emulsion comprising: (a) an internal water phase (W1) comprising: (a1) one or more non-volatile biocide active ingredients; (a2) one or more lipophilic surfactants; and (a3) water; (b) an intermediate oily phase (O) between the internal water phase (W1) and the external water phase (W2) comprising one or more oil compounds; and (c) an external water phase (W2) comprising: (c1) one or more volatile biocide active ingredients; (c2) one or more hydrophilic surfactants; and (c3) water; wherein: the amount of non-volatile biocide active ingredient is comprised from 0.4 to 3% by weight of the total weight of the double emulsion; the amount of volatile biocide active ingredient is comprised from 0.3 to 40% by weight of the total weight of the double emulsion; the amount of intermediate oil phase (O) (b) is comprised from 2.5 to 30% by weight of the total weight of the double emulsion; and the mean particle size of the emulsion (W1/O) is comprised from 50 nm to 300 nm.

A second aspect of the present invention relates to a process for the preparation of the water-in-oil-in-water double emulsion according to the first aspect of the invention comprising: (a) Mixing one or more oil compounds (O) and one or more non-volatile biocide active ingredients to obtain a mixture; (b) Adding a solution of one or more lipophilic surfactants in water to the mixture obtained in step (a) to obtain a water-in-oil emulsion (W1/O) with a mean particle size comprised from 5 $\mu$m to 20 $\mu$m; (c) Reducing the particle size of the water-in-oil emulsion obtained in step (b) to obtain a water-in-oil emulsion having a particle size comprised from 50 nm to 300 nm; and (d) Dispersing the water-in-oil emulsion (W1/O) obtained in step (c) in a mixture of the volatile biocide active ingredient and one or more of the hydrophilic surfactant in water (W2) to obtain a water-in-oil-in-water emulsion (W1/O/W2).

A third aspect of the present invention relates to a composition comprising the water-in-oil-in-water double emulsion according to the first aspect of the invention together with one or more appropriate excipients or carriers.

The fourth aspect of the invention relates to the use of the water-in-oil-in-water double emulsion of the first aspect of the invention as biocidal compound.

Finally, the fifth aspect of the invention relates to a method for disinfection comprising applying an appropriate amount of the water-in-oil-in-water double emulsion of the first aspect of the invention, or alternatively the composition of the third aspect of the invention, to solid surfaces.

BRIEF DESCRIPTION OF THE DRAWINGS

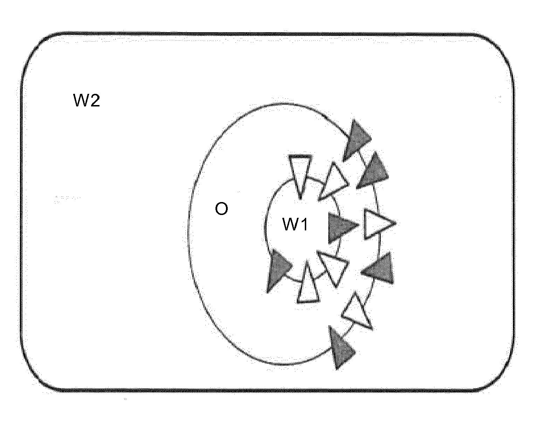

Figure 1. is an squeme which shows an embodiment of the water-in-oil-in-water emulsion of the present invention. The symbols of the Figure represent the following: W1 represents the internal water phase comprising the non-volatile biocide active ingredient, ○ represents the oily phase comprising the oil compounds, W2 represents the external water phase comprising the non-volatile biocide active ingredient, ▲ represents the hydrophilic surfactant, and △ represents the lipophilic surfactant.

DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

In the context of the invention, the terms "water-in oil-in water", ""water-in-oil-in-water", "W/O/W", "W1/O/W2", and "water-in-oil-in water" double emulsion have the same meaning and are used interchangeably. They refer to an emulsion that includes an inner emulsion (also named inner emulsion discontinuous phase), that is the "water-in-oil emulsion" (W1/O) comprising a multiplicity of discrete oily phase dispersed within the external "water" phase (W2) (also named continuous phase), wherein the oily phase comprises a inner "water" phase (W1) (cf. figure 1).

The terms "water-in oil", "water-in-oil" and "W1/O" emulsion have the same meaning and are used interchangeably. They refer to an emulsion that includes a discontinuous phase, that is "water" phase (W1) or predominantly aqueous phase, and a continuous phase, that is an "oil" phase, or predominantly organic liquid phase, such as a predominantly polymer solvent phase. The oil phase is at least partially immiscible with the water phase. This "water-in-oil emulsion" (W1/O) is forming "particles" in a discontinuos water phase. The terms "particles" or "drops" have the same meaning and are used interchangeably.

The term "particle size" refers to the particle diameter of the inner emulsion (W1/O), that is to the inner emulsion discontinuous phase based on an approximate spherical shape of the particle based on a volumetric measurement of the particle. In addition to spherical particles, the oil-in-water emulsions of the present invention can also comprise without limitation ellipsoidal and/or cylindrical particles.

In the context of the invention, the term "nanoparticle" or "nanoscale droplets" have the same meaning and are used interchangeably. They refer to a particle with at least two dimensions at the nanoscale, particularly with all three dimensions at the nanoscale, where the nanoscale is in the range about 20 nm to about 500 nm.

The term "size" refers to a characteristic physical dimension. For example, in the case of a nanoparticle that is substantially spherical, the size of the nanoparticle corresponds to the diameter of the nanoparticle. In the case of a nanoparticle that is substantially rod-shaped with a substantially circular cross-section, such as nanowire or a nanotube, the size of the nanoparticle corresponds to the diameter of the cross-section of the nanoparticle. In the case of a nanoparticle that is substantially box-shaped, such as a nanocube, a nanobox, or a nanocage, the size of the nanoparticle corresponds to the maximum edge length. When referring to a set of nanoparticles as being of a particular size, it is contemplated that the set of nanoparticles can have a distribution of sizes around the specified size. Thus, as used herein, a size of a set of nanoparticles can refer to a mode of a distribution of sizes, such as a peak size of the distribution of sizes.

The method for determining the particle size of the compositions of the present invention can be the dynamic light scattering (DLS) technique.

The particle size of the nanoparticles (nanoscale droplets) of the double emulsion of the present invention can be measured by any method disclosed in the state of the art for measuring the particle size of nanoparticles. In particular, the method used in the present invention for measuring the particle size is the dynamic light scattering (DLS) technique. Particle size distributions were measured using Malvern Zetasizer Instrument in undiluted samples.

The term "surfactant" refers to a material which lowers the surface tension of a liquid and the interfacial tension between two liquids, allowing their easier mixing and spreading. Surfactants have a hydrophilic head that is attracted to water molecules and a hydrophobic tail that repels water and simultaneously attaches itself to oil and grease in dirt. These opposing forces loosen the dirt and suspend it in the water, having the ability to remove it from surfaces such as the human skin, textiles, and other solids, when surfactants are dissolved in water.

The term "hydrophilic surfactant" refers to a surfactant having an "hydrophilic-lipophilic balance value" (HLB) value equal to or higher than 10.

The term "lipophilic surfactant" refers to a surfactant having an "hydrophilic-lipophilic balance value" (HLB) value lower than 10. The terms "lipophilic" and "hydrophobic" have the same meaning and are used interchangeably.

As used herein, the term "hydrophilic-lipophilic balance value" or "HLB" have the same meaning and are used interchangeably. They refer to an empirical parameter used to characterize the relative hydrophilicity or lipophilicity of an amphiphilic compound, such as a surfactant. The determination of HLB is well defined within the ability of one ordinarily skilled in the art. However, it should be appreciated that the HLB value of a surfactant is merely a rough guide generally used to enable the formulation of various products. For many important surfactants, including several polyethoxylated surfactants, it has been reported that HLB values can differ by as much as about 8 HLB units, depending upon the empirical method chosen to determine the HLB value (Schott et al.,"Comments on hydrophile-lipophile balance systems" J. Pharm. Sciences, 1990, vol. 79(1), pp. 87-88).

The term "polyglycol" refers to a dihydroxyether formed by dehydration of two or more glycol molecules.

The term "biocide active ingredient" refers to a chemical active ingredient capable of destroying a harmful organism; or counteracting, neutralizing, or avoiding the action of a harmful organism; or exercise any control over a harmful organism, by chemical or biological means. Examples of biocide active ingredients include, among others, sodium hypochlorite, hydrogen peroxide, amines, quaternary ammonium compounds, and chlorine dioxide.

The term "volatile biocide active ingredient" includes any biocide active ingredient that is readily vaporizable at a relatively low temperature, such as room temperature or human body temperature. The term "room temperature" refers to the temperature comprised from 20°C to 25°C, and the term "human body temperature" is temperature comprised from 34°C to 41°C.

The term "oxygen release compound" refers to any compound containing a dioxygen (O- O) bond, particularly bivalent O-O bonds. Non-limiting examples of oxygen release compounds include peracids, peracid salts, and peroxides such as hydrogen peroxide.

The term "alky" refers to a saturated straight, or branched hydrocarbon chain which contains the number of carbon atoms specified in the description or claims. If there is no number of carbon atoms specified, then alkyl group has from 1 to 12 carbon atoms. Examples include the group methyl, ethyl, propyl, isopropyl, butyl, isobutyl, sec-butyl, tert-butyl, n-pentyl, and n-hexyl.

The term known "aryl" refers to a ring system with 1-3 rings which contains the number of carbon atoms specified in the description or claims, the rings being saturated, partially unsaturated, or aromatic; and being fused, bridged, or can contain different types of fusion; being at least one of the rings an aromatic ring; and the ring system being optionally substituted by one or more radicals independently selected from the group consisting of $(C_1-C_6)$alkyl, $(C_1-C_6)$haloalkyl, $(C_1-C_6)$alkoxy, nitro, cyano, and halogen.

The term known "heteroaryl" refers to a ring system with 1-3 rings which contains the number of carbon atoms specified in the description or claims, wherein one or more of the ring members, preferably 1, 2, 3, 4 ring members, is selected from N, NH, O, and S; the rings being saturated, partially unsaturated, aromatic; and being fused, bridged, or can contain different types of fusion; being at least one of the rings an aromatic ring; and the ring system being optionally substituted by one or more radicals independently selected from the group consisting of $(C_1-C_6)$alkyl, $(C_1-C_6)$haloalkyl, $(C_1-C_6)$alkoxy, nitro, cyano, and halogen.

For the purposes of the present invention, in "fused" rings the fusion occurs through one bond which is common to two adjoining rings; and in "bridged" rings the fusion occurs through a sequence of atoms (bridgehead) which is common to two rings.

The term "percentage (%) by weight" refers to the percentage of each ingredient of the emulsion or alternatively of the composition in relation to the total weight.

As mentioned above, an aspect of the present invention refers to a water-in-oil-in-water (W1/O/W2) double emulsion which comprises (a) an internal water phase (W1) comprising one or more non-volatile biocide active ingredients; (b) an intermediate oily phase (O) between the internal water phase and the external water phase comprising one or more oil compounds; and (c) an external water phase (W2) comprising one or more volatile biocide active ingredients.

In comparison with the disinfectant water-in-oil-in-water double emulsion of the state of the art, the double emulsion of the present invention has a more prolonged broad-spectrum biocidal effect. As it is shown in section 5.2.3. and Tables 9, and 10 above, the double emulsion of the invention is stable having a remnant biocidal effect, even until 72 hours after its application. This effect happens even until occuring re-contaminations, or after a prolonged storage period.

In the water-in-oil-in-water double emulsion of the invention, the non-volatile biocide active ingredient is selected from the group consisting of biguanides, tertiaryamines, ethanolamines, quaternary ammonium compounds, and mixture thereof.

In an embodiment of the invention, the non-volatile biocide active ingredient is a biguanide selected from the group consisting of chlorhexidine; octenidine; alexidine; and polymer biguanides selected from the group consisting of polyhexamethylene biguanide (PHMB), and polyaminopropyl biguanide; and salts and mixture thereof. Preferably, the non-volatile biocide active ingredient is selected from chlohexidine diacetate, chlorhexidine dihydrochloride, chlorhexidine gluconate, and polyhexamethylene biguanide.

In other embodiment of the invention, the non-volatile biocide active ingredient is a tertiaryamine; preferably the tertiaryamine is a N-oxide tertiaryamine selected from the group selected from I-dodecylpiperidine N-oxide, ethylendamine tetraacetic acid (EDTA), EDTA with aminopolycarboxylic acid, 4-alkylmorpholine-N-oxide, 4-decylmorpholine-N-oxide, 4-dodecylmorpholine-N-oxide, 4-tetradecylmorpholine-N-oxide, and 4-hexadecylmorpholine-N-oxide.

In other embodiment of the invention, the non-volatile biocide active ingredient is a ethanolamine; preferably the ethanolamine is selected from 2-(N-amyl) ethanolamine, 2-cyclohexyl ethanolamine, and N-butyl ethanolamine.

In other embodiment of the invention, the non-volatile biocide active ingredient is a quaternary ammonium compounds (QAC). QAC is the common name of a group of compounds having the following formula $R_1R_2R_3R_4N^+X^-$. Depending on the nature of the R groups, the anion (X-), and the number of quaternary nitrogen atoms present in the formula, QACs are typically classified as:

(a) mono alkyl trimethyl ammonium compounds such as for example cetyl trimethyl ammonium bromide (CTAB); alkyl trimethyl ammonium chloride; alkyl aryl trimethyl ammonium chloride; cetyl dimethyl ethyl ammonium bromide;

(b) mono alkyl dimethylbenzyl ammonium salts such as for example alkyl dimethyl benzyl ammonium chlorides; dodecyl dimethyl 3,4 dichlorobenzyl ammonium chloride; and mixtures of alkyl dimethyl benzyl and alkyl dimethyl substituted benzyl (ethyl benzyl) ammonium chlorides dialkyl dimethyl ammonium salts;

(c) dialkyl dimethyl ammonium salts such as for example didecyl dimethyl ammonium halides and octyl dodecyl dimethyl ammonium chlorides;

(d) heteroaryl ammonium salts such as for example cetylpyridinium halide (CPC); I-[3-chloroallyl]-3,5,7-triaza-I-azoniaadamantane; alkyl-isoquinolinium bromide and alkyldimethylnaphthylmethyl ammonium chloride;

(e) polysubstituted quaternary ammonium salts such as for example alkyl dimethyl benzyl ammonium saccharinate and alkyl dimethylethylbenzyl ammonium cycloheylsulfamate; and

(f) bisquaternary ammonium salts or I,10-bis(2- mthyl-4-aminoquinolinium chloride)-decane; bl,6-Bis[l-methyl-3-(2,2,6-trmethyl cyclohexyl)-propyldimethyl ammonium chloride] hexane.

In a prefered embodiment, the non-volatile biocide active ingredient is a quaternary ammonium compound selected from the group consisting of monoalkyltrimethyl ammonium salts; monoalkyldimethylbenzyl ammonium salts; dialkyldimethyl ammonium salts; heterocyclic ammonium salts; polysubstituted quaternary ammonium salts, bisquaternary ammonium salt; and polymeric ammonium salts. In a more prefered embodiment, the quaternary ammonium compound is selected from the group consisting of benzalkonium chloride, dequalinium chlorine, laurolinium acetate; and hedaquinium chloride.

In the water-in-oil-in-water double emulsion of the invention, the volatile biocide active ingredient is selected from the group consisting of hypohalite salt; oxygen release compound;; and mixture thereof.

In an embodiment of the invention, the volatile biocide active ingredient is a alkali or alkaline earth salts of hypohalite; preferably alkali or alkaline earth salts of hypohalide compound selected from the group consisting of sodium hypochlorite, calcium hypochlorite, and chlorine dioxide.

In other embodiment of the invention, the volatile biocide active ingredient is a oxygen release compound selected from the group consisting of hydrogen peroxide, perborate, perborates, percarbonate, organic peracid, inorganic peracid, organic persalt, inorganic persalt, monoperoxysulfate salt, and mixture thereof; preferably the oxygen release compound is selected from hydrogen peroxide, peracetic acid, and potassium monoperoxysulfate.

In an embodiment of the invention, the emulsion is that wherein the non-volatile biocide active ingredient is a biguanide and the volatile biocide active ingredient is a hypohalite. In a preferred embodiment, the emulsion is that wherein the non-volatile biocide active ingredient is chlorhexidine, or salts thereof and the volatile biocide active ingredient is sodium hypochlorite; or alternatively the non-volatile biocide active ingredient is polyhexamethylene biguanide and the volatile biocide active ingredient is sodium hypochlorite.

In other embodiment of the invention, the emulsion is that wherein the non-volatile biocide active ingredient is a biguanide and the volatile biocide active ingredient is an oxygen release compound. In a preferred embodiment, the emulsion is that wherein the non-volatile biocide active ingredient is chlorhexidine or salts thereof and the volatile biocide active ingredient is hydrogen peroxide or potassium monoperoxysulfate; or alternatively the non-volatile biocide active ingredient is polyhexamethylene biguanide and the volatile biocide active ingredient is hydrogen peroxide or potassium monoperoxysulfate.

The water-in-oil-in-water double emulsion of the present invention comprises one or more hydrophilic surfactant having an HLB value equal to or higher than 10; preferably, equal to or higher than 12; more preferably, equal to or higher than 15. In an embodiment of the invention the hydrophilic surfactant is selected from the group consisting of $(C_2-C_8)$diol, $(C_2-C_8)$glycol, polyglycols and mixture thereof. In a preferred embodiment, the hydrophilic surfactant is a polyglycol. Examples of suitable polyglycols for the present invention include among others ethylene glycol, propylene glycol, polyethylene glycols, polypropylene glycols, methoxypolyethylene glycols, polybutylene glycols, block copolymers of butylene oxide and ethylene oxide, and block copolymers of ethylene glycol and propylene glycol. In a preferred embodiment, the hydrophilic surfactant having an HLB value equal to or higher than 10 is a block copolymers of ethylene glycol and propylene glycol; more preferred a block copolymers of ethylene glycol and propylene glycol having a molar mass of polypropylene glycol equal to or lower than 2000 (g/mol); and a weight percentage of polyethylene glycol comprised from 70 to 100. In a much more preferred embodiment the hydrophilic surfactant having an HLB value equal to or higher than 10 is selected from Pluronic F127, Pluronic PE6800 and mixture thereof.

The water-in-oil-in-water double emulsions of the present invention comprises one or more lipophilic surfactant having an HLB value lower than 10; preferably, equal to or lower than 8; more preferably, equal to or lower than 5. In an embodiment of the invention the lipophilic surfactant is selected from the group consisting of for the present invention include $(C_2-C_8)$diol, $(C_2-C_8)$glycol, polyglycols and mixture thereof. In a preferred embodiment, the lipophilic surfactant is a polyglycol. Examples of suitable polyglycols for the present invention include among others ethylene glycol, propylene glycol, polyethylene glycols, polypropylene glycols, methoxypolyethylene glycols, polybutylene glycols, block copolymers of butylene oxide and ethylene oxide, and block copolymers of ethylene glycol and propylene glycol. In a preferred embodiment, the lipophilic surfactant having an HLB value lower than 10 is a block copolymers of ethylene glycol and propylene glycol; more preferred a block copolymers of ethylene glycol and propylene glycol having a molar mass of polypropylene glycol equal to or higher than 2500 (g/mol); and a weight percentage of polyethylene glycol comprised from 20 to 60. In a much more preferred embodiment the lipophilic surfactant having an HLB value lower than 10 is selected from Pluronic P123, Pluronic PE10300, Pluronic PE10400, Pluronic PE10500, and mixture thereof. In a preferred embodiment the lipophilic surfactant is a mixture, which comprises Pluronic P123, Pluronic PE10300, Pluronic PE10400, and Pluronic PE10500.

The oily phase of the water-in-oil-in-water double emulsion of the present invention comprises one or more oil compounds. In an embodiment, oil compounds of the oily phase is selected from the group consisting of essential oil, fatty acid esters, and mixture thereof.

In an embodiment of the invention, the oil compounds of the oily phase is one or more essential oils. The "term essential oil" is a low volatile oil from natural extracts which are compatible with the biocide active ingredients of the emulsion. In an embodiment, the oily phase is an essential oil selected from the group consisting of citrus oil, a leaf oil; a spice oil; a seed oil; a peel oil, and mixture thereof. Examples of suitable essential oil for the present invention include among others oil such as lemon, orange, lime, grapefruit, and mandarin; mint oil, tea tree, and peppermint; bergamot oil, lavandino, eucaliptus and rosemary; flax seed oil, and cranberry seed oil. In a preferred embodiment, the essential oil is lemon oil, tea tree oil, rosemary oil, lavandino oil, and eucaliptus oil; more preferably lemon oil.

In another alternative embodiment, the oil compounds of the oily phase is one or more fatty acid esters. The term "fatty acid" refers to any natural or synthetic carboxylic acid compound comprising an alkyl chain that optionally may be monounsaturated, or polyunsaturated; and may also be substituted. The term "fatty acid ester" refers to any compound comprising at least one ester of a fatty acid. Examples of suitable fatty acid ester for the present invention include caprylic capric triglyceride, isopropyl palmitate/myristate, ethyl hexyl, palmitate/stearate/cocoate, propylene glycol dicaprylate/dicaprate; polyethylenglycol 7 glyceryl cocoate, cetearyl octanoate/isononanoate, cetyl octanoate/pamilitate, isononyl isononanoate, glycol stearate/distearate, C12-C15 alkyl benzoate, glycerol esteres, ethyl hexyl ethyl hexanoate/nonanoate. Preferably, the fatty acid ester is a mixture of caprylic and capric triglyceride (i.e. caprylic/capric triglyceride).

In another alternative embodiment, the oil compounds of the oily phase is a mixture of one or more essential oils and one or more fatty acid ester. Preferably, a mixture of lemon oil and caprylic/capric triglyceride. In a preferred embodiment, the weight ratio between the essential oil to fatty acid esters is comprised from 10:90 to 100:0; preferably 50:50.

In an embodiment of the invention, the double emulsion comprising one or more biguanides selected from chlorhexidine or salts thereof, and polyhexamethylene biguanide; one or more volatile biocide active ingredients selected from hypohalite and oxygen release compound; one or more lipophilic surfactants having an HLB lower than 10 selected from $(C_2\text{-}C_8)$diol, $(C_2\text{-}C_8)$glycol, polyglycols; preferably, the lipophilic surfactant is a block copolymers of ethylene glycol and propylene glycol; and one or more hydrophilic surfactants having an HLB value equal to or higher than 10 selected from $(C_2\text{-}C_8)$diol, $(C_2\text{-}C_8)$glycol, polyglycols; preferably, the lipophilic surfactant is a block copolymers of ethylene glycol and propylene glycol.

The amount of the of non-volatile biocide active ingredient is comprised from 0.4 to 3% by weight of the total weight of the double emulsion. In an embodiment of the invention, optionally in combination with one or more features of the various embodiments described above or below, the amount of the amount of non-volatile biocide active ingredient is comprised from 0.6 to 1 % by weight of the total weight of the double emulsion.

The amount of the of volatile biocide active ingredient is comprised from 0.3 to 40% by weight of the total weight of the double emulsion. In an embodiment of the invention, optionally in combination with one or more features of the various embodiments described above or below, the amount of volatile biocide active ingredient is comprised from 1 to 35% by weight of the total weight of the double emulsion; preferably comprised from 5 to 15% by weight of the total weight of the double emulsion.

The amount of the intermediate oil phase is comprised from 2.5 to 30% by weight of the total weight of the double emulsion. In an embodiment of the invention, optionally in combination with one or more features of the various embodiments described above or below, the amount of the intermediate oil phase is comprised from 5 to 20% by weight of the total weight of the double emulsion.

In an embodiment of the invention, the double emulsion as defined above comprises:

(a) from 5 to 30% by weight of the internal water phase (W1) comprising in relation to the total weight of the double emulsion:

(a1) from 0.4 to 3% by weight of one or more non-volatile biocide active ingredients;
(a2) from 0.125 to 0.5% by weight of one or more lipophilic surfactants; and
(a3) from 3.8 to 21.5% of water;

(b) from 2.5 to 30% by weight of the intermediate oily phase in relation to the total weight of the double emulsion ; and
(c) from 40 to 87% by weight of the external water phase (W2) comprising in relation to the weight o fthe double emulsion:

(c1) from 0.3 to 10% by weight of one or more volatile biocide active ingredients;
(c2) from 2 to 8% by weight of one or more hydrophilic surfactants; and
(c3) from 37 to 80 % by weight of water;

being the sum of the weight of phases of the emulsion 100%.

In other embodiment of the invention, the double emulsion comprises:

(a) from 5 to 20% by weight of the internal water phase (W1) comprising in relation to the total weight of the double emulsion:

(a1) from 0.5 to 2% by weight of one or more non-volatile biocide active ingredients;
(a2) from 0.2 to 0.4% by weight of one or more lipophilic surfactants; and
(a3) from 2.8 to 13.6% of water;

(b) from 3 to 15% by weight of the intermediate oily phase in relation to the total weight of the double emulsion; and
(c) from 60 to 85% by weight of the external water phase (W2) comprising in relation to the weight o fthe double emulsion:

(c1) from 1 to 5% by weight of one or more volatile biocide active ingredients;
(c2) from 2 to 6% by weight of one or more hydrophilic surfactants; and
(c3) from 57 to 74% by weight of water;

being the sum of the weight of phases of the emulsion 100%.

In other In other embodiment of the invention, the double emulsion comprises:

(a) from 5 to 15% by weight of the internal water phase (W1) comprising in relation to the total weight of the double emulsion:

(a1) from 0.5 to 2% by weight of one or more non-volatile biocide active ingredients;
(a2) from 0.2 to 0.3% by weight of one or more lipophilic surfactants; and
(a3) from 1.8 to 9.7 % of water;

(b) from 3 to 10% by weight of the intermediate oily phase in relation to the total weight of the double emulsion ; and
(c) from 70 to 85% by weight of the external water phase (W2) comprising in relation to the weight o fthe double emulsion:

(c1) from 2 to 4% by weight of one or more volatile biocide active ingredients;
(c2) from 3 to 5% by weight of one or more hydrophilic surfactants; and
(c3) from 65 to 76% by weight of water;

being the sum of the weight of phases of the emulsion 100%.

As it is shown in section 5.2.3., the double emulsion of the present invention as defined above is active for a long period of time after its use on the surface or tissue, for instance until 72 hours, and even after prolonged periods of storage (cf. Table 10).

It is disclosed in the state of the art that changes in the physical properties of the emulsion such as for example pH, viscosity, particle size and/or distribution of the emulsion can provoque a destabilizing phenomena such as creaming, flocculation, total o partial coalescence, phase inversion and Ostwald ripening. As it is shown in sections 3, and 5.2.3. the double emulsion of the invention mantain its physical and chemical properties protecting and stabilizing both biocide active ingredients in the separate phases, even after a long periods of storage.

The mean particle size of the oily phase (inner emulsion discontinuous phase, (W1/O)) of the invention is comprised from 50 nm and 300 nm; preferably comprised from 100 to 200 nm; preferably 150 nm. The specific composition of the double emulsion of the invention in combination with the amount of the oily phase and the particle size of the inner emulsion discontinuous phase as mentioned above has the advantage of providing the appropiatre number of drops in order to form a continuous film on all the treated surface/tissue.

The term "mean particle size" means that 50% of the measurable particles of the oil phase have a larger equivalent diameter, and the other 50% of the particles have a smaller equivalent diameter. Additionally, the particles of oily phase of the present invention have a dispersion index comprised from 0 to less than 1; preferably from 0.1 to 0.5; more preferably 0.2. The dispersion index is defined as the ratio of the variance ($\sigma$) to the mean ($\mu$) and it is calculated by the following formula:

$$D = \frac{\sigma^2}{\mu}.$$

and it is indicative of the "uniformity" of the particle size of the oily phase.

The double emulsion of the present invention allows a first inmediate disinfection on the tissue or object (surface) by the biocidal effect of the volatile biocide active ingredient followed by the subsequent release of the non-volatile biocide active ingredient from the emulsion. The specific emulsion of the present invention allows a prolonged released profile of the non-volatile biocide active ingredient from the inner water phase. The concentration of the non-volatile active ingredient, which is in contact with the volatile active ingredient either in the own double emulsion of the invention or in gaseous phase after its release outside the emulsion, is constant and lower than 15% by weight of the total weight of the double emulsion. It is advantegeous because the low and constant concentration of the non-volatile active ingredient avoids the interaction between both biocidal active ingredients either in liquid and in gaseous phase. In an embodiment of the invention, the water-in-oil-in-water double emulsion of the invention is that wherein the concentration of non-volatile biocide active ingredient released from the internal water phase is less than 15% by weight of the total weight of the double emulsion. Particularly, the concentration is less than 5% by weight of the total weight of the double emulsion; more particularly, the concentration is comprised from 0.5% to 1 % by weight of the total weight of the double emulsion. Preferably, the concentration of non-volatile biocide active ingredient released from the internal water phase is from 0.6% to 0.75 by weight of the total weight of the double emulsion.

As mentioned above, other aspect of the present invention refers to a process for the preparation of the water-in-oil-in-water double emulsion (W1/O/W2) as defined above. The process comprises two-emulsification steps, the first step for forming an inverse water-in-oil emulsion (W1/O), followed by emulsification of this mixture in water (W2) using combination of surfactants. In particular, the process comprises: (a) Mixing one or more oil compounds (O) and one or more non-volatile biocide active ingredients to obtain a mixture; (b) Adding a solution of one or more lipophilic surfactants in water to the mixture obtained in step (a) to obtain a water-in-oil emulsion (W1/O) with a mean particle size comprised from 5 $\mu$m to 20 $\mu$m; (c) Reducing the particle size of the water-in-oil emulsion obtained in step (b) to obtain a water-in-oil emulsion having a mean particle size comprised from 50 nm to 300 nm; and (d) Dispersing the water-in-oil emulsion (W1/O) obtained in step (c) in a mixture of the volatile biocide active ingredient and one or more of the hydrophilic surfactant in water (W2) to obtain a water-in-oil-in-water emulsion (W1/O/W2).

In particular, the reduction of the particle size of the water-in-oil emulsion obtained in step (b) can be carried out by using any of the techniques commonly used in the state of the art for reducing the particle size of an emulsion. Examples of suitable techniques for reducing the particle size can be high speed homogenization, high pressure homogenazion, ultra-sound, jet mill and cavitation. In an embodiment of the invention, step (c) is carried out by high pressure homogenization.

The process mentioned above allows controlling the particle size and homogenity of oily droplets (W1/O). Particularly, this process allows forming stable nanoscale droplets (or nanoparticles) emulsion of the invention having the specific composition of surfactant system and comprising the uncompatible biocide active ingredients in an unique emulsion. This process is simple, safe and easy to scale up because of reduction of almost any interaction between incompatible biocide active ingredients.

A water-in-oil-in-water double emulsion (W1/O/W2) obtainable by (a) Mixing one or more oil compounds (O) and one or more non-volatile biocide active ingredients to obtain a mixture; (b) Adding a solution of one or more lipophilic surfactants in water to the mixture obtained in step (a) to obtain a water-in-oil emulsion (W1/O) with a mean particle size comprised from 5 $\mu$m to 20 $\mu$m; (c) Reducing the particle size of the water-in-oil emulsion obtained in step (b) to obtain a water-in-oil emulsion having a particle size comprised from 50 nm to 300 nm; (d) Dispersing the water-in-oil emulsion (W1/O) obtained in step (c) in a mixture of the volatile biocide active ingredient and one or more of the hydrophilic surfactant in water (W2) to obtain a water-in-oil-in-water emulsion (W1/O/W2) is also part of the invention.

The term "obtainable" and "obtained" have the same meaning and are used interchangeably. In any case, the expression "obtainable" encompasses the expression "obtained".

As mentioned above, other aspect of the present invention refers to a composition comprising the water-in-oil-in-water double emulsion as defined above together with one or more appropriate excipient or carrier.

Suitable excipients or carriers for the present invention can be anyone commouly used in antiseptic or disinfectant composition disclosed in the state of the art. For instance, the excipients or carriers can be selected from the group of dyes; flavors; solvents for instance glycols; diluents for instance water; surfactants for instance anionic surfactants; stabilizers; and rheologic modifiers. In an embodiment, the composition further comprises one or more glycols selected from the group consisting of ester derivatives of a glycol and ether derivative of a glycol. The term "glycol" or "vicinal diol" or "1, 2-diols" which are used interchangeably refers to aliphatic organic compounds in which two hydroxyl (OH) groups are attached to adjacent carbon atoms.

In an embodiment of the invention, the composition further comprises one or more additional active ingredients. Examples of such active ingredients include, among others cleaning compounds; and disinfectant compounds for instance virucide compounds, fungicide compounds, bactericidal compounds, levuricide compounds, and sporicidal compounds.

As mentioned above, the double emulsion of the present invention can be used as biocidal compound. Thus the fourth aspect of the present invention is the use of the water-in-oil-in-water double emulsion as defined above as biocidal compound. In an embodiment, the use of the emulsion of the invention as the biocidal compound is selected from disinfectant and antiseptic agent.

In an embodiment, the double emulsions of the invention can be used as disinfectant. The term "disinfectant" refers to a product which kills microorganisms on inanimate objects. Examples of inanimate objects include hard surfaces, medical devices, and surgical equipment.

In an alternative embodiment, the double emulsions of the invention can be used as antiseptic. The term "antiseptic" refers to a product that inhibits the growth or kills bacteria, or others microorganisms, in or on the living tissues of humans or animals such as for example on the skin.

The present invention also relates to a method for disinfection. Said method comprises applying an appropriate amount of the water-in-oil-in-water (W1/O/W2) double emulsion as defined in the first aspect for the invention, or alternatively the composition as defined in the third aspect of the invention, to solid surfaces.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

**EXAMPLES**

**General considerations**

The reagents used in the following examples have been purchased at: Pluronic P123 (BASF); Pluronic PE10300 (BASF); Pluronic F127 (BASF); Pluronic PE6800 (BASF); Chlorhexidine (Sparchim); CHLX/isopropanol (Sparchim/Sigma Aldrich); PHMB (Lonza); Sodium hypochlorite (Henckel); Caroat (Antiseptica); Peracetic acid (FMC Foret); Hydrogen peroxide (FMC Foret); Chlorine dioxide (Pharmacal); Benzylammonium chloride (MultiBind biotec GMBH); Lemon oil (Sigma Aldrich); Lemon oil/fatty acid ester (Sigma Aldrich/Sternchemie); Lemon oil /bergabest (Sigma Aldrich/Sternchemie); Tea tree oil (Sigma Aldrich). Water (distiled water).

**1. Water-in-oil-in-water double emulsions of the present invention**

**1.A. Composition**

Tables 1-5 show the qualitive and quantitative composition of the water-in-oil-in-water emulsion of the present invention.

The compositions of the present invention 1-20 disclosed below have a mean particle size of 150 nm.

Table 1

| W1/O/W2 | Component | Ex. 1 | | Ex. 2 | | Ex. 3 | | Ex. 4 | |
|---|---|---|---|---|---|---|---|---|---|
| | | Name | (%) | Name | (%) | Name | (%) | Name | (%) |
| **W1** | non-volatile biocide | CHLX | 0.6 | CHLX | 0.6 | CHLX/ isopropanol | 0.6 | PHMB | 1 |
| | lipophilic surfactants | Pluronic P123 | 0.25 | Pluronic P123 | 0.25 | Pluronic P123 | 0.25 | Pluronic P123 | 0.25 |
| | Water | Water | 9.15 | Water | 9.15 | Water | 9.15 | Water | 8.75 |
| **O** | Oil compound | Lemon oil | 5 | Lemon oil | 5 | Lemon oil | 5 | Lemon oil | 5 |
| **W2** | volatile biocide | Sodium hypochlorite | 3 | Sodium hypochlorite | 1 | Sodium hypochlorite | 3 | Caroat | 3 |
| | Hydrophilic surfactants | Pluronic F127 | 4 | Pluronic F127 | 4 | Pluronic F127 | 4 | Pluronic F127 | 4 |
| | water | Water | 78 | Water | 80 | Water | 78 | Water | 78 |
| [1]CHLX: chlorhexidine; PHMB: polyhexamethylene biguanide; Pluronic P123: is the tradename for a triblock copolymer manufactured by the BASF corporation of formula $HO(CH_2CH_2O)_{20}(CH_2CH(CH_3)O)_{70}(CH_2CH_2O)_{20}H$ having a HLB value of 8; Pluronic F127: is the tradename for s a triblock copolymer consisting of a central hydrophobic block of polypropylene glycol flanked by two hydrophilic blocks of polyethylene glycol having a HLB value of 22. | | | | | | | | | |

Table 2

| W1/O/W2 | Component | Ex. 5 | | Ex. 6 | | Ex. 7 | | Ex. 8 | |
|---|---|---|---|---|---|---|---|---|---|
| | | Name | (%) | Name | (%) | Name | (%) | Name | (%) |
| **W1** | non-volatile biocide | PHMB | 0.75 | PHMB | 0.50 | PHMB | 0.25 | PHMB | 0.75 |
| | lipophilic surfactants | Pluronic P123 | 0.25 | Pluronic P123 | 0.25 | Pluronic P123 | 0.25 | Pluronic P123 | 0.25 |
| | Water | Water | 9.00 | Water | 9.25 | Water | 9.5 | Water | 9.00 |
| **O** | Oil compound | Lemon oil | 5 | Lemon oil | 5 | Lemon oil | 5 | Lemon oil | 5 |
| **W2** | volatile biocide | Caroat | 3 | Caroat | 3 | Sodium hypochlorite | 3 | Sodium hypochlorite | 3 |
| | Hydrophilic surfactants | Pluronic F127 | 4 | Pluronic F127 | 4 | Pluronic F127 | 4 | Pluronic F127 | 4 |
| | Water | Water | 78 | Water | 78 | Water | 78 | Water | 78 |

[1]PHMB: polyhexamethylene biguanide; Caroat is the trademark of a mixture whose main component is potassium peroxymonosulfate. Pluronic P123: is the tradename for a triblock copolymer manufactured by the BASF corporation of formula $HO(CH_2CH_2O)_{20}(CH_2CH(CH_3)O)_{70}(CH_2CH_2O)_{20}H$ having a HLB value of 8; Pluronic F127: is the tradename for s a triblock copolymer consisting of a central hydrophobic block of polypropylene glycol flanked by two hydrophilic blocks of polyethylene glycol having a HLB value of 22.

12

Table 3

| W1/O/W2 | Component | Ex. 9 | | Ex. 10 | | Ex. 11 | | Ex. 12 | |
|---|---|---|---|---|---|---|---|---|---|
| | | Name | (%) | Name | (%) | Name | (%) | Name | (%) |
| W1 | non-volatile biocide | PHMB | 0.50 | PHMB | 0.75 | PHMB | 0.75 | PHMB | 0.75 |
| | lipophilic surfactants | Pluronic P123 | 0.25 | Pluronic P123 | 0.25 | Pluronic P123 | 0.25 | Pluronic PE10300 | 0.25 |
| | Water | Water | 9.25 | Water | 9.00 | Water | 9.00 | Water | 9.00 |
| O | Oil compound | Lemon oil | 5 | Lemon oil | 5 | Lemon oil | 5 | Lemon oil | 5 |
| W2 | volatile biocide | Sodium hypochlorite | 3 | Hydrogen peroxide | 5 | Peracetic acid | 0.3 | Sodium hypochlorite | 3 |
| | Hydrophilic surfactants | Pluronic F127 | 4 | Pluronic F127 | 4 | Pluronic F127 | 4 | Pluronic PE6800 | 4 |
| | Water | Water | 78 | Water | 76 | Water | 80.7 | Water | 78 |
| PHMB: polyhexamethylene biguanide; Pluronic P123: is the tradename for a triblock copolymer manufactured by the BASF corporation of formula $HO(CH_2CH_2O)_{20}(CH_2CH(CH_3)O)_{70}(CH_2CH_2O)_{20}H$ having a HLB value of 8; Pluronic F127: is the tradename for s a triblock copolymer consisting of a central hydrophobic block of polypropylene glycol flanked by two hydrophilic blocks of polyethylene glycol having a HLB value of 22. | | | | | | | | | |

EP 3 028 568 A1

Table 4

| W1/O/W2 | Component | Ex. 13 | | Ex. 14 | | Ex. 15 | | Ex. 16 | |
|---|---|---|---|---|---|---|---|---|---|
| | | Name | (%) | Name | (%) | Name | (%) | Name | (%) |
| W1 | non-volatile biocide | PHMB | 0.75 | PHMB | 0.75 | PHMB | 0.75 | PHMB | 0.75 |
| | lipophilic surfactants | Pluronic PE10300 | 0.25 | Pluronic PE10300 | 0.25 | Pluronic PE10300 | 0.25 | Pluronic PE10300 | 0.25 |
| | Water | Water | 9.00 | Water | 9.00 | Water | 9.00 | Water | 9.00 |
| O | Oil compound | Lemon oil | 5 | Lemon oil | 5 | Lemon oil | 5 | Lemon oil | 5 |
| W2 | volatile biocide | Hydrogen peroxide | 5 | Hydrogen peroxide | 7 | Peracetic acid | 0.3 | caroat | 3 |
| | Hydrophilic surfactants | Pluronic PE6800 | 4 | Pluronic PE6800 | 4 | Pluronic PE6800 | 4 | Pluronic PE6800 | 4 |
| | Water | Water | 76 | Water | 74 | Water | 80.7 | Water | 78 |

PHMB: polyhexamethylene biguanide; Pluronic PE10300: block copolymer of ethylene oxide and propylene oxide from BASF having a HLB value of 6.8; Pluoronic PE6800 is the tradename for s a triblock copolymer consisting of a central hydrophobic block of polypropylene glycol flanked by two hydrophilic blocks of polyethylene glycol having a HLB value of 29.

Table 5

| W1/O/W2 | Component | Ex. 17 | | Ex. 18 | | Ex. 19 | | Ex. 20 | |
|---|---|---|---|---|---|---|---|---|---|
| | | Name | (%) | Name | (%) | Name | (%) | Name | (%) |
| W1 | non-volatile biocide | PHMB | 0.75 | PHMB | 0.75 | PHMB | 0.75 | PHMB | 0.75 |
| | lipophilic surfactants | Pluronic PE10300 | 0.25 | Pluronic PE10300 | 0.25 | Pluronic PE10300 | 0.25 | Pluronic PE10300 | 0.25 |
| | Water | Water | 9.00 | Water | 9.00 | Water | 9.00 | Water | 9.00 |
| O | Oil compound | Lemon oil /fatty acid ester | 5 (100:0) | Lemon oil /bergabest[1] | 5 (50:50) | Lemon oil /bergabest[1] | 5 (25:75) | Lemon oil /bergabest[1] | 5 (12.5:87.5) |
| W2 | volatile biocide | Hydrogen peroxide | 7 | Hydrogen peroxide | 7 | Hydrogen peroxide | 7 | Hydrogen peroxide | 7 |
| | Hydrophilic surfactants | Pluronic PE6800 | 2 | Pluronic PE6800 | 2 | Pluronic PE6800 | 2 | Pluronic PE6800 | 2 |
| | Water | Water | 76 | Water | 76 | Water | 76 | Water | 76 |

PHMB: polyhexamethylene biguanide [1] bergabest is the trademark of a mixture of fatty acid esters whose main component is Caprylic capric triglyceride. Pluronic PE10300: block copolymer of ethylene oxide and propylene oxide from BASF having a HLB value of 6.8; Pluoronic PE6800 is the tradename for a triblock copolymer consisting of a central hydrophobic block of polypropylene glycol flanked by two hydrophilic blocks of polyethylene glycol having a HLB value of 29.

**1.B. Preparation Process**

Compositions of the present invention 1-20 disclosed in section 1A were prepared following the process disclosed below which comprises two-emulsification steps.

STEP A: Preparation of the water-in-oil emulsion (W1/O)

(A1) The oily phase (O; 5g); and the non volatile biocide active ingredient were mixed in a rotor-stator mixer (ultraturrax) at 8000 rpm for 5 min.

(A2) To the mixture obtained in setp (A1) a disolution of the lipophilic surfactant in water (5g; 0.25g of surfactant in 4.75 ml of water) was added. The resulting mixture was mixed at a 8000rpm for 5 min.

(A3) The resulting emulsion of step (A2) was homogenized at high pressure (microfluidizer) at 6 kPa to obtain the water-in-oil emulsion with a nanometric mean particle size.

STEP B: Preparation of the water-in-oil-in-water emulsion (W1/O/W2)

(B1) Preparation of phase W1: the volatile biocide active ingredient (5g), the hydrophilic surfactant (4g), and water (78g) were mixed.

(B2) To phase W1 obtained in step (B1) the water-in-oil emulsion obtained in step (A3) was added under manual stirring for 1 min to obtain the water-in-oil-in-water double emulsion (W1/O/W2) of the present invention.

**2. Comparative water-in-oil-in-water double emulsion**

**2.A. Composition**

Table 6 shows the qualitative and quantitative composition of comparative water-in-oil-in-water emulsions outside the scope of the present invention. The comparative compositions 1-4 disclosed below have a mean particle size of 150 nm .

Table 6

| W1/O/W2 | Component | Comparative Ex. 1 | | Comparative Ex. 2 | | Comparative Ex. 3 | | Comparative Ex. 4 | |
|---|---|---|---|---|---|---|---|---|---|
| | | Name | (%) | Name | (%) | Name | (%) | Name | (%) |
| W1 | non-volatile biocide | Benzyl ammonium chloride | 0.11 | PHMB | 0.25 | PHMB | 0.25 | Chlorine dioxide | 0.2 |
| | lipophilic surfactants | Pluronic P123 | 0.25 | Pluronic P123 | 0.25 | Pluronic P123 | 0.25 | Pluronic P123 | 0.25 |
| | Water | Water | 9.64 | Water | 9.50 | Water | 9.50 | Water | 9.55 |
| O | Oil compound | Lemon oil | 5 | Lemon oil | 5 | Lemon oil | 5 | Tea tree oil | 5 |
| W2 | Water | Water | 3 | Caroat | 3 | Sodium hypochlorite | 3 | Water | 3 |
| | Hydrophilic surfactants | Pluronic F127 | 4 | Pluronic F127 | 4 | Pluronic F127 | 4 | Pluronic F127 | 4 |
| | Water | Water | 78 | Water | 78 | Water | 78 | Water | 78 |

PHMB: polyhexamethylene biguanide; Pluronic P123: is the tradename for a triblock copolymer manufactured by BASF of formula $HO(CH_2CH_2O)_{20}(CH_2CH(CH_3)O)_{70}(CH_2CH_2O)_{20}H$ having a HLB value of 8; Pluronic F127: is the tradename for a triblock copolymer consisting of a central hydrophobic block of polypropylene glycol flanked by two hydrophilic blocks of polyethylene glycol having a HLB value of 22.

## 2.B. Preparation Process

Comparative compositions 1-4 disclosed in section 2A were prepared following the process as defined in section 1A using the components specified in Table 6.

## 3. Stability test

### 3.1. Direct visual inspection

A visual test of emulsions of the invention (1-20) and the comparative emulsions (1-4) was carried out at room temperature (at 20-25°C) at time zero and every month for 1 year.

Creaming was observed in the tested emulsions of the present inventive and the comparative emulsion, it means that the dispersed phase has a lower density than the continuous phase. The creaming effect is reversed after shaking and initial state was recovered.

Thus, the composictions of the inveniton can be considered visually stables.

### 3.2. Turbidity Test

Stability of emulsions of the present invention was based on turbidity measurements using a turbidimeter Turbiscan Lab. Turbiscan technology consists in measuring the backscattering and transmission intensities versus the sample separation.

A water-in-oil-in-water emulsion of the present invention (1-20) or a comparative emulsion (1-4) was placed in a vial and introduced into the turbidimeter for a predetermined scan routine. The stability index was carried out at 25°C.

All tested emulsions have a turbidity index lower than 15. Therefore, the compositions of the invention can be considered stables.

### 3.2. Stability on surface

This study determines the visual stabilty and microbiological activity of emulsions of the present invention after applying them on hard surfaces.

Method:

Water-in-oil-in-water emulsions of the present invention or comparative compositions were sprayed over plastic and glass surfaces. Then they were wiped with a cloth, and dried at environmental conditions.

Optical comprobation:

Macroscopic level: No visible residue of the sprayed emulsion was observed on the surface, even on glass.

Microscopic level: emulsion droplets uniformely distributed over the surface were observed at the optical microscopic level.

### 3.3. Conclusion of Stability test

The composictions of the invention are stable during the preparation process and at the storage conditions.

## 4. Release profile of non-volatile biocide

This study determines the kinetic release profile of the non-volatile biocide active ingredient from the internal water phase (W1) of the emulsion wherein a surface is impregnated with the tested composition and then the surface is dried.

These tests were carried out with simplified models of the compositions of the invention which comprises testing simplified compositions 5'-11'. Simplified compositions 5'-11' contains the components of the water-in-oil-in-water emulsions of Examples 5-11 of the present invention, wherein the volatile biocide is removed and the amount of the volatile biocide has been substituted by the same amount of water. Therefore, the composition of the internal water phase (W1), and oily phase (O) of the comparative simplified compositions 5'-12' are the same as shown in Tables 2-3 for compositions 5-12 respectively, and the composition of the external water phase (W2) comprises an amount of 4% of pluronic F127 (as hydrophilic surfactant) and an amount of 81% of water.

METHOD

The tested simplified compositions were placed over styrene well plates, and the composition was kept on the surface for 5 minutes and wiped with a piece of cloth. Then, the surface of the piece of cloth were allowed to dry at different times. For each time, the free non-volatile biocide active ingredient was measured.

The measurement was carried out by dissolving the dry film containing the non-volatile biocide active ingredient in 0.3 ml of water and was analyzed by UV- Visible spectroscopy at 235 nm.

Table 7 shows the kinetic release of PHMB from styrene surfaces.

| Time (h) | Simplified Compositions 5'-11' | |
| --- | --- | --- |
| | PHMB concentration (%) | Standard deviation |
| 0 | 0.73928 | 0,02885 |
| 1 | 0.77723 | 0,01582 |
| 2 | 0.81483 | 0,03952 |
| 6 | 0.8454 | 0,01884 |
| 23 | 0.87807 | 0,02117 |
| 24 | 0.88229 | 0,0454 |

From the kinetic release results obtained from the simplified models of Examples 7-11 (cf. Table 7), it is deductible that the compositions, which comprise the specific composition as defined in the present invention, allow having a constant free concentration of the non-volatile biocide active ingredient comprised from $0.75 \pm 0.05$ % for a period of 24 hours on innert surfaces. The fact that free non-volatile biocide has been detected on treated surfaces up to 24 hours, indicating that the compositions of the invention have a long-life (remnant) biocidal activity against microorganisms, has to be considered an advantage.

Therefore, the specific composition of the present invention allows having a prolonged and constant release profile of the non-volatile biocide active ingredient for having appropriate biocidal effective amount of free non-volatile biocida, and at the same time a appropriate free biocidal concentration for avoiding the interaction with the volatile biocida.

## 5. Biocidal Activity Test

The experiments for both immediate and remnant effect were performed using:

Bacteries:

- gram-positive bacteria: *Staphylococcus aureus* ATCC 6538; and *Enterococcus hirae* ATCC 10541
- gram-negative bacteria: *Escherichia coli* ATCC 10536; *and*
  *Pseudomonas aeruginosa* ATCC 15442

Fungi:

- *Candida albicans* ATCC 10231; and
- *Aspergillus brasiliensis* ATCC 164049).

The conditions and microorganismsconcentration are those disclosed in the standardized test protocols (European Standards); and the stain were maintained according the procedure described in EN 12353: 2013.

Neutralizers:

All neutralizers of the residual antimicrobial activity of chemical disinfectants were validated. For immediate biocidal test membrane filtration method is used and the rinsing liquid is 0.1 % tryptone, 0.9% NaCl , 0.3% Na-thiosulfate, 3.4% potassium dihydrogen phosphate and 0.5% polysorbate 80. The used neutralizer in the remnant biocidal test are listed below:

For chlorine derivates (sodium hypochlorite and chlorine dioxide): 3% polysorbate80, 3% saponin, 0,3% lecitine, and 1,5% Na-thiosulfate.

For peracetic acid: 3% polysorbate 80, 3% saponine, 0,3% lecithin, and 0,3% Na-thiosulfate.

For caroat and hydrogen peroxide: 3% polysorbate 80, 3% saponine, 0.3% lecithin for chlorexidine; and 3% saponin in sodium buffer phosphate

**5.1. Immediate biocidal activity test**

**5.1.1. Method**

The procedures adopted to prove immediate activity follow the European Standard protocols for bactericidal, fungicidal and sporicidal testing in the medical area and surface disinfectant conditions. Examples of such test are EN 13727: 2012, "Quantitative suspension test for the evaluation of bactericidal activity (phase 2, step 1)"; EN 13624: 2013, "Quantitative suspension test for the evaluation of fungicidal or yeasticidal activity (phase 2, step 1)"; and EN 14347: 2005, "Basic sporicidal activity (phase 1, step 1)".

For all protocols, a sample of the product as delivered and diluted with water (ready-to-use products) is added to a test suspension bacteria or other microorganism in clean conditions. Products will be tested at a concentration of 97%. The mixture is maintained at the temperature and the contact time. At the end of this contact time, an aliquot is taken, and biocide action is immediately neutralized or suppressed (validated method). The number of surviving microorganism in each dilution or sample is determinate and the reduction is calculated.

**5.1.2. Results**

The amount of the volatile biocide active ingredient in the external water phase (W2) of the water-in-oil-in-water (W1/O/W2) double emulsion of the present invention allows having the biocidal effective amount of free volatile biocide in the surface to be treated.

The concentration of the free volatile biocide active ingredient allows having the biocidal effect at a short time of contact against the susceptible biocide agents for each active ingredient.

The effective concentration of the free volatile biocide active ingredient for each susceptible microorganism and contact time has been defined in the state of the art (cf. Block SS, "Disinfection, Sterilization and Preservation", Lippincott Williams & Wilkins, 5th ed. Philadelphia, 2001, pp. 143-147, 187-199, and 530-531, and Zhu PC, "New Biocides Development. The combined Approach of Chemistry and Microbiology". ACS Symposium series 967. American Chemical Society, Washiton; 2007, pp 294-306. Russell et al."Principles and Practice Disinfection, Preservation & Sterilization" Blackwell Publishing Ltd, 4th ed. Oxford (UK); 2004, pp. 32-33. These effective concretations for each free volatile biocide active ingredient are listed below in Table 8:

**Table 8**

| volatile biocide active ingredient | biocidal Effective amount | Microorganism | Contact time (min) | Log reduction |
|---|---|---|---|---|
| PHMB | 0.75% | *S.aureus* | 5 | > 5 log |
| | | *E.hirae* | 5 | >5 log |
| | | *P.aeruginosa* | 5 | >5 log |
| | | *E.coli* | 5 | >5 log |
| | | *C.albicans* | 5 | >4 log |
| Sodium hypochlorite | 1000-1200 ppm | *S.aureus* | <5 | > 5 log |
| | | *E.hirae* | <5 | >5 log |
| | | *P.aeruginosa* | <5 | >5 log |
| | | *E.coli* | <5 | >5 log |
| | | *C.albicans* | <5 | >4 log |

(continued)

| volatile biocide active ingredient | biocidal Effective amount | Microorganism | Contact time (min) | Log reduction |
|---|---|---|---|---|
| Peracetic acid | 0.3% | S.aureus | 5 | > 5 log |
| | | E.hirae | 5 | >5 log |
| | | P.aeruginosa | 5 | >5 log |
| | | E.coli | 5 | >5 log |
| | | C.albicans | 5- 10 | >4 log |
| | | B. subtilis | 5-10 | >4 log |
| Hydrogen peroxide | 7% | S.aureus | 5 | > 5 log |
| | | E.hirae | 5 | >5 log |
| | | P.aeruginosa | 5 | >5 log |
| | | E.coli | 5 | >5 log |
| | | C.albicans | 5 | >4 log |

The number of live pathogens eliminated by a disinfectant is measured by the decimal log reduction value. It is known that a disinfectant is effective against bacteries when the value of log reduction is equal to or higher than 5 ($\geq$5-log reduction means lowering the number of microorganisms by 100,000-fold). In the case of moulds, a disinfectant is considered effective when the log reduction value is equal to or higher than 4 ($\geq$4-log reduction means lowering the number of fongs by 10,000-fold). And, in the case of bactarial spores, a disinfectant is considered effective when the log reduction value is equal to or higher than 4 ($\geq$4-log reduction means lowering the number of sbacterial spores by 10,000-fold).

## 5.2. Remnant biocidal activity test

### 5.2.1. Remnant micromethod test

The method is summarized as follows:

All the process has been performed in a safety biology cabinet. Briefly, two hundred $\mu$l of each tested composition along with control sample (sterile distilled water) are placed into 48 wells of sterile polystyrene microplate. They are left in contact for 10 minutes. After that, the product or water is removed and the microplate dried for 20 min. Then the microplate is covered and kept in dark during application time (24 hours). After that, 200 $\mu$l of the bacterial or fungi suspension (1.5-5x10$^5$ cfu/ml) are added in each well and incubated for 5 minutes at 37°C. Forty microlitres of this suspension are transferred to a well of 100-well microtitre plate containing 360$\mu$l of Tryptone Soya Broth (TSA) for bacterial or Malt extract agar (MEA) for fungi. The bacterial or fungidal growth is detected with a turbidimeter microplate reader. The turbidity measurement is recorded every 10 min. using a 420-580nm filter, at 37°C over a period of 18-24 hours for bacteria and 48h for fungi.

## 5.2.2. ASTM 2180 test

The method is summarized as follows:

Each composition tested is spread in a stainless steel carrier and dried. Each composition is kept in dark during application time (0 and 24 h). There are 3 replicates for each tested composition and a control sample (sterile distilled water). At the end of this time, 500 $\mu$l of the inoculated (bacterial, yeast and mould) semi-solid agar slurry (0.85 % NaCl and 0.3% Agar) is pipetted onto the carrier as a thin layer (1 mm film) and kept in humidity chamber at 37°C during a contact time span of 24 hours.

Surviving microorganisms are recovered via elution of the agar slurry inoculum. Carriers are transferred into a vessel containing 10 ml of neutralizer. Then the vessel is sonicated and vortexed during 1 minute each.

Serial ten-fold dilutions of the neutralized mixture are performed in diluent (0.85% NaCl and 0.1% tryptone). One ml sample of each dilutions, in duplicated, is spread in TSA for bacterial or MEA plates for fungi and incubated for 24 hours at 37°C for bacterial or 48 hours at 30°C for fungi.

Bacterial or fungi colonies (number of survivors) are counted and recorded. Finally, the bacterial/ fungi reduction percentage from treated samples versus untreated control is calculated.

**5.2.3. Results**

**5.2.3.1. Remnant biocidal activity associated to the water-in-oil-in-water (W1/O/W2) double emulsion**

Table 9 shows the remnant effect of biocidal activity of the compositions of the invention for compositions which have been freshly prepared before its storage.

Table 9

| Composition | Bacteria | | | | Fungi |
|---|---|---|---|---|---|
| | *S.aureus* | *P.aeruginosa* | *E. coli* | *E. hirae* | *C. albicans* |
| Ex. 1 | + | + | NT | NT | NT |
| Ex. 2 | + | + | NT | NT | NT |
| Ex. 3 | + | + | NT | NT | NT |
| Ex. 4 | + | + | + | + | + |
| Ex. 5 | + | + | + | + | + |
| Ex. 6 | + | + | + | + | + |
| Ex. 7 | + | + | + | + | + |
| Ex. 8 | + | + | + | + | + |
| Ex. 9 | + | + | + | + | + |
| Ex. 10 | + | + | + | + | + |
| Ex. 11 | + | + | + | + | + |
| Ex. 12 | + | + | + | + | + |
| Ex. 13 | + | + | + | + | + |
| Ex. 14 | + | + | + | + | + |
| Ex. 15 | + | + | + | + | + |
| Ex. 16 | + | + | + | + | + |
| Ex. 17 | + | + | + | + | + |
| Ex. 18 | + | + | + | + | + |
| Ex. 19 | + | + | + | + | + |
| Ex. 20 | + | + | + | + | + |
| Comparative Ex.1 | - | - | - | - | - |
| Comparative Ex.2 | - | - | - | - | - |
| Comparative Ex.3 | - | - | - | - | - |
| Comparative Ex.4 | - | - | - | - | - |
| NT: no tested; +: remnant effect (24h); -: not remnant effect. | | | | | |

Table 10 shows the remnant effect of biocidal activity of the compositions of the invention for compositions which have been storage for a prolonged period of time. Positive remnant biocidal activity was shown for the tested compositions after the storage period specified in the following Table.

Table 10

| Composition | Storage period (month) | | | | |
|---|---|---|---|---|---|
| | S.aureus | P.aeruginosa | E. coli | E. hirae | C. albicans |
| Ex. 6 | 7 | 7 | 7 | 7 | 7 |
| Ex. 15 | 2 | 2 | 2 | 2 | 2 |
| Ex. 16 | 6 | 6 | 6 | 6 | 2 |
| Ex. 17 | 6 | 6 | 6 | 6 | 2 |
| Ex. 19 | 2 | 2 | 2 | 2 | 2 |

The results of Tables 8, 9 and 10 show that the compositions of the present invention, which comprises the water-in-oil-in-water (W1/O/W2) double emulsion defined above allows having a stable emulsion with dual inmediate-remnant biocidal activity for a long period of time even after a prolonged period of storage. It is proved that the specific compositions of the emulsions having the non-volatile active ingredient in the internal water phase (W1) and the volatile active ingredient in the external water phase (W2) is essential for having the remnant biocidal activity.

REFERENCES CITED IN THE APPLICATION

1. US20100158851

2. European Standartization Committee. EN 12353: 2013. Chemical disinfectants and antiseptics - Preservation of test organisms used for the determination of bactericidal (including Legionella), mycobactericidal, sporicidal, fungicidal and virucidal (including bacteriophages) activity.

3. European Standartization Committee. EN 13727:2012+A1:2014 Quantitative suspension test for the evaluation of bactericidal activity in the medical area - Test method and requirements (phase 2, step 1).

4. European Standartization Committee. EN 13624:2013. Chemical disinfectants and antiseptics. Quantitative suspension test for the evaluation of fungicidal or yeasticidal activity in the medical area. Test method and requirements (phase 2, step 1).

5. European Standartization Committee. EN 14347:2005. Chemical disinfectants and antiseptics. Basic sporicidal activity. Test method and requirements (phase 1, step 1).

6. Block SS, "Disinfection, Sterilization and Preservation", Lippincott Williams & Wilkins, 5th ed. Philadelphia, 2001, pp. 143-147, 187-199, and 530-531.

7. Zhu PC. "New Biocides Development. The combined Approach of Chemistry and Microbiology". ACS Symposium series 967. American Chemical Society, Washiton; 2007, pp 294-306.

8. Russell et al."Principles and Practice Disinfection, Preservation & Sterilization" Blackwell Publishing Ltd, 4th ed. Oxford (UK); 2004, pp. 32-33.

**Claims**

1. A water-in-oil-in-water (W1/O/W2) double emulsion comprising:

    (a) an internal water phase (W1) comprising:

        (a1) one or more non-volatile biocide active ingredients;
        (a2) one or more lipophilic surfactants; and
        (a3) water;

(b) an intermediate oily phase (O) between the internal water phase (W1) and the external water phase (W2) comprising one or more oil compounds; and

(c) an external water phase (W2) comprising:

(c1) one or more volatile biocide active ingredients;
(c2) one or more hydrophilic surfactants; and
(c3) water;

wherein:

the amount of non-volatile biocide active ingredient is comprised from 0.4 to 3% by weight of the total weight of the double emulsion;

the amount of volatile biocide active ingredient is comprised from 0.3 to 40% by weight of the total weight of the double emulsion;

the amount of intermediate oil phase (O) (b) is comprised from 2.5 to 30% by weight of the total weight of the double emulsion; and

the mean particle size of the emulsion (W1/O) is comprised from 50 nm to 300 nm.

2. The water-in-oil-in-water double emulsion according to claim 1, comprising:

(a) from 5 to 30% by weight of the internal water phase (W1) comprising in relation to the total weight of the double emulsion:

(a1) from 0.4 to 8% by weight of one or more non-volatile biocide active ingredients;
(a2) from 0.125 to 0.5% by weight of one or more lipophilic surfactants; and
(a3) from 3.8 to 21.5% of water;

(b) from 2.5 to 30% by weight of the intermediate oil phase (O) in relation to the total weight of the double emulsion; and

(c) from 40 to 87% by weight of the external water phase (W2) comprising in relation to the total weight of the double emulsion:

(c1) from 0.3 to 10% by weight of one or more volatile biocide active ingredients;
(c2) from 2 to 8% by weight of one or more hydrophilic surfactants; and
(c3) from 37 to 81 % by weight of water;

being the sum of the weight of phases of the emulsion 100%.

3. The water-in-oil-in-water double emulsion according to any of the claims 1-2, wherein the volatile biocide active ingredient is selected from the group consisting of oxygen release compound, hypohalite salt, and mixture thereof.

4. The water-in-oil-in-water emulsion according to any of the claims 1-3, wherein the non-volatile biocide active ingredient is selected from the group consisting of biguanides, tertiaryamines, ethanolamines, quaternary ammonium compounds and mixture thereof.

5. The water-in-oil-in-water double emulsion according to any of the claims 1-4, wherein the hydrophilic surfactant is selected from the group consisting of block copolymers of ethylene glycol and propylene glycol having a HLB value equal to or higher than 10, polyethyleneglycol -20 sorbitan monostearate, polyethyleneglycol -4 sorbitan monostearate, polyethyleneglycol -20 sorbitan monopalmitate, polyethyleneglycol -20 sorbitan monostearate, polyethyleneglycol -4 sorbitan monostearate, polyethyleneglycol -20 sorbitan tristearate, PEG-20 sorbitan monooleate, and 4-octylphenol polyethoxylate.

6. The water-in-oil-in-water double emulsion according to any of the claims 1-5, wherein the lipophilic surfactant is selected from the group consisting of block copolymers of ethylene glycol and propylene glycol having a HLB value lower than 10, sorbitan monolaurate, sorbitan monopalmitate, sorbitan monostearate, sorbitan monooleate, sorbitan sesquioleate, sorbitan trioleate, and sorbitan isostearate.

7. The water-in-oil-in-water double emulsion according to any of the claims 1-6, wherein the oil compound of oily phase is selected from the group consisting of essential oils, and fatty acid esters.

8. The water-in-oil-in-water double emulsion according to any of the claims 1-7, wherein the amount of non-volatile biocide active ingredient released from the internal water phase is less than 15% by weight of the total weight of the double emulsion.

9. The water-in-oil-in-water double emulsion according to claim 8, wherein the amount of non-volatile biocide active ingredient released from the internal water phase is comprised from 0.5 to 1% by weight.

10. A process for the preparation of the water-in-oil-in-water double emulsion as defined in any of the claims 1-9 comprising:

   a. Mixing one or more oil compounds (O) and one or more non-volatile biocide active ingredients to obtain a mixture;
   b. Adding a solution of one or more lipophilic surfactants in water to the mixture obtained in step (a) to obtain a water-in-oil emulsion (W1/O) with a mean particle size comprised from 5 $\mu$m to 20 $\mu$m;
   c. Reducing the particle size of the water-in-oil emulsion obtained in step (b) to obtain a water-in-oil emulsion having a particle size comprised from 50 nm to 300 nm.
   d. Dispersing the water-in-oil emulsion (W1/O) obtained in step (c) in a mixture of the volatile biocide active ingredient and one or more of the hydrophilic surfactant in water (W2) to obtain a water-in-oil-in-water emulsion (W1/O/W2).

11. A composition comprising the water-in-oil-in-water double emulsion as defined in any of the claims 1-9 together with one or more appropriate excipients or carriers.

12. The composition according to claim 11, further comprising one or more additional active compounds selected from the group consisting of cleaning compounds and disinfectant compounds.

13. Use of the water-in-oil-in-water double emulsion as defined in any of the claims 1-9, as biocidal compound.

14. Use of the water-in-oil according to claim 13, as disinfectant.

15. A method for disinfection comprising applying an appropriate amount of the water-in-oil-in-water (W1/O/W2) double emulsion as defined in any of the claims 1-9, or alternatively the composition as defined in any of the claims 11-12, to solid surfaces.

W2

O

W1

Europäisches
Patentamt

European
Patent Office

Office européen
des brevets

# EUROPEAN SEARCH REPORT

Application Number

EP 14 38 2498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2010/158851 A1 (YEUNG KING LUN [CN] ET AL) 24 June 2010 (2010-06-24) | 1-15 | INV. A01N25/04 A01N25/28 A01N25/30 A01N59/00 A01P1/00 |
| Y | * the whole document * | 1-15 | |
| X | YAN LI ET AL: "A Multilevel Antimicrobial Coating Based on Polymer-Encapsulated ClO 2", LANGMUIR, vol. 25, no. 23, 1 December 2009 (2009-12-01), pages 13472-13480, XP055174162, ISSN: 0743-7463, DOI: 10.1021/la901974d | 1-15 | |
| Y | * pages 13472 and 13473; page 13475, the last paragraph of the left column and the whole right column; page 13477, the last paragraph of the right column; page 13478 and page 13479, left column * | 1-15 | |
| Y | US 2010/004124 A1 (TAFT DAVID [US] ET AL) 7 January 2010 (2010-01-07) * paragraphs 238, 240, 242, 259 and 326 * | 1-15 | |
| Y | US 2002/025986 A1 (RODHAM DAVID KIRK [GB] ET AL) 28 February 2002 (2002-02-28) * the claims; paragraph 13 and the examples * | 1-15 | TECHNICAL FIELDS SEARCHED (IPC)  A01N |
| Y | US 2013/183394 A1 (WUTTKE WOLFGANG [DE]) 18 July 2013 (2013-07-18) * the abstract; paragraphs 22-24 and 32 and the examples * | 1-15 | |

The present search report has been drawn up for all claims

| Place of search | Date of completion of the search | Examiner |
|---|---|---|
| Munich | 6 March 2015 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 028 568 A1

## ANNEX TO THE EUROPEAN SEARCH REPORT
## ON EUROPEAN PATENT APPLICATION NO.

EP 14 38 2498

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2015

| Patent document cited in search report | | Publication date | Patent family member(s) | | Publication date |
|---|---|---|---|---|---|
| US 2010158851 | A1 | 24-06-2010 | AU | 2009327015 A1 | 24-06-2010 |
| | | | CA | 2736575 A1 | 24-06-2010 |
| | | | CN | 102149278 A | 10-08-2011 |
| | | | EP | 2359691 A1 | 24-08-2011 |
| | | | HK | 1158452 A1 | 15-08-2014 |
| | | | JP | 5638536 B2 | 10-12-2014 |
| | | | JP | 2012512190 A | 31-05-2012 |
| | | | KR | 20110112274 A | 12-10-2011 |
| | | | TW | 201031719 A | 01-09-2010 |
| | | | US | 2010158851 A1 | 24-06-2010 |
| | | | US | 2014341961 A1 | 20-11-2014 |
| | | | WO | 2010069152 A1 | 24-06-2010 |
| US 2010004124 | A1 | 07-01-2010 | US | 2010004124 A1 | 07-01-2010 |
| | | | WO | 2010141892 A2 | 09-12-2010 |
| US 2002025986 | A1 | 28-02-2002 | AT | 269155 T | 15-07-2004 |
| | | | AU | 9338201 A | 30-10-2001 |
| | | | DE | 60103882 D1 | 22-07-2004 |
| | | | DE | 60103882 T2 | 23-06-2005 |
| | | | DK | 1276554 T3 | 01-11-2004 |
| | | | EP | 1276554 A1 | 22-01-2003 |
| | | | JP | 2004501740 A | 22-01-2004 |
| | | | US | 2002025986 A1 | 28-02-2002 |
| | | | WO | 0178888 A1 | 25-10-2001 |
| US 2013183394 | A1 | 18-07-2013 | BR | PI0816414 A2 | 07-10-2014 |
| | | | CN | 101883610 A | 10-11-2010 |
| | | | DE | 102007044916 A1 | 23-04-2009 |
| | | | EP | 2192956 A2 | 09-06-2010 |
| | | | RU | 2010115278 A | 27-10-2011 |
| | | | US | 2013183394 A1 | 18-07-2013 |
| | | | WO | 2009036751 A2 | 26-03-2009 |

EPO FORM P0459

For more details about this annex : see Official Journal of the European Patent Office, No. 12/82

## REFERENCES CITED IN THE DESCRIPTION

**Patent documents cited in the description**

- US 20100158851 A

**Non-patent literature cited in the description**

- **SCHOTT et al.** Comments on hydrophile-lipophile balance systems. *J. Pharm. Sciences,* 1990, vol. 79 (1), 87-88
- **BLOCK SS.** Disinfection, Sterilization and Preservation. Lippincott Williams & Wilkins, 2001, 143-147, 187-199, 530-531
- New Biocides Development. The combined Approach of Chemistry and Microbiology. **ZHU PC.** ACS Symposium series 967. American Chemical Society, 2007, 294-306
- **RUSSELL et al.** Principles and Practice Disinfection, Preservation & Sterilization. Blackwell Publishing Ltd, 2004, 32-33
- New Biocides Development. The combined Approach of Chemistry and Microbiology. **ZHU PC.** ACS Symposium series 967. American Chemical Societ, 2007, 294-306